Europäisches Patentamt

European Patent Office

Office européen des brevets

(11) Publication number: **0 157 496**
A2

## (12) EUROPEAN PATENT APPLICATION

(21) Application number: **85301360.5**

(22) Date of filing: **28.02.85**

(51) Int. Cl.⁴: **G 01 N 15/06**, G 01 N 27/72

(30) Priority: **28.03.84 CA 450798**

(43) Date of publication of application: **09.10.85**
**Bulletin 85/41**

(84) Designated Contracting States: **CH DE FR GB LI**

(71) Applicant: **NORTHERN TELECOM LIMITED,**
**1600 Dorchester Boulevard West, Montreal Quebec**
**H3H 1R1 (CA)**

(72) Inventor: **Shannon, Michael Allen, R.R.1, Box 44,**
**Glenburnie Ontario K0H 1S0 (CA)**

(74) Representative: **Crawford, Andrew Birkby et al, A.A.**
**THORNTON & CO. Northumberland House 303-306 High**
**Holborn, London WC1V 7LE (GB)**

(54) Monitoring of magnetically permeable particles in a carrier material.

(57) Monitoring the quantity of magnetically permeable particles dispersed within a carrier of a composite material by energizing an inductor coil (28) which surrounds the material and then producing a signal corresponding to inductance of the coil. The inductance is influenced by the quantity of permeable particles in the carrier and within the coil and hence the signal is a measure of this quantity and is usable in a method of controlling the particles. In this control, the signal is evaluated and if it differs from that representing a desired quantity of particles, a control means is operated to adjust input of particles or carrier into the composite material. The composite material may be in fluid state and is passed through the coil and within a dielectric vessel (30, 58). Alternatively, the material is a dry dielectric layer provided upon a conductor (14) which is passed through the coil.

ACTORUM AG

1

## MONITORING OF MAGNETICALLY PERMEABLE PARTICLES IN A CARRIER MATERIAL

This invention relates to the monitoring of magnetically permeable particles held in a carrier material.

In the telecommunications cable industry, it is common practice to surround each electrical conductor with at least one layer of insulation which affects the electrical performance of the conductor, e.g. by producing a desired dielectric effect and helping to control other design characteristics such as mutual capacitance. For various reasons, continuous inductive loadings have been proposed and used in dielectric layers of electrical conductors in the telecommunications cable industi These continuous inductive loadings have comprised discrete particles of a magnetically permeable material, such as ferrite, which are dispersed throughout a dielectric layer of polymeric substance. To produce a layer with a continuous inductive loading, it is necessary to mix together the particles with the carrier material in a fluid state. One problem which is presented is the control of the relative proportions of the particles and fluid carrier in the mix. While for batch operations, it appears to be a relatively simple matter to measure the quantities before mixing, it would be preferable in order to reduce chances of error, to have some method of monitoring the amounts of the particles and carrier. On the other hand, commercial production calls for continuous removal of the mix and thus continuous replenishing of the mix with the particles and carrier and, to maintain relative quantities in the mix between certain limits, some monitoring method is essential.

In a composite material comprising a quantity of magnetically permeable particles dispersed within a carrier, the invention provides a method of monitoring the quantity of particles within the carrier comprising energizing an inductor coil disposed in a position surrounding the composite material, and producing a signal corresponding to the inductance of the coil, said inductance influenced by the quantity of magnetically permeable particles in the composite material and within the coil.

The method according to the invention is preferably performed by measuring the frequency corresponding to the inductance.

The above method may be performed upon a dry composite material, i.e. a dry dielectric layer provided upon a conductor or upon a fluid composite material, i.e. with the carrier in fluid form. In a case where the method is performed upon the fluid composite material, the inductor coil is in a position surrounding a dielectric vessel containing the material. Alternatively, where the method is performed upon the composite material carried as a dry dielectric layer upon a conductor, then it is convenient to maintain the layer covered conductor along a fixed pass line through the coil to enable the quantity of particles to be monitored progressively along the conductor.

The invention also includes a method of controlling the quantity of magnetically permeable particles dispersed within a carrier in a composite material comprising monitoring the quantity of particles in the method of the invention defined above, evaluating the produced signal and upon an evaluation differing from that representing a desired quantity of particles, operating a control means to adjust input of either the particles or fluid carrier or both in providing the composite material in fluid form so as to provide the desired quantity of particles in the material.

The invention also includes apparatus for monitoring, in a composite material, the quantity of magnetically permeable particles dispersed within a carrier comprising an inductor coil, a retaining means to hold the composite material in a fixed position radially within the coil, and means for providing an electrical signal corresponding to the inductance of the coil.

In the above apparatus, the means for providing the electrical signal preferably comprises an oscillator which operates at the resonant frequency of the inductor coil circuit.

The retaining means comprises a dielectric vessel which i disposed within the inductor coil, in a case where the composite material is in a fluid state. However, for use with a telecommunications conductor surrounded by a dried layer of the composite material, the retaining means comprises a guide to hold the conductor along a fixed pass line through the coil.

The invention further includes apparatus for controlling, in a composite material, the quantity of magnetically permeable particles dispersed within a carrier during continuous preparation and removal of the composite material in fluid form comprising a mixing device, valve means to control the addition of separate ingredients into the mixing device, apparatus for monitoring the quantity of particles as defined above and including an oscillator to provide a signal corresponding to the resonant frequency of the inductor coil circuit, a second oscillator to provide a signal corresponding to a datum oscillation, evaluating means for the signals, and control means operable upon an evaluation differing from that representing a desired quantity of particles, to adjust the valve means and affect the relative rates of input of the ingredients thereby to adjust the quantity of particles towards that desired.

4

Embodiments of the invention will now be described by way of example with reference to the accompanying drawings in which:

Figure 1 is a diagrammatic representation of a control apparatus according to a first embodiment for controlling the quantity of magnetically permeable particles in a mixture;

Figure 2 is a diagrammatic representation of part of the control apparatus and showing a monitoring apparatus;

Figure 3 is a cross-sectional view through part of the monitoring apparatus;

Figure 4 is a cross-sectional view through the monitoring apparatus along the line '4' in Figure 3 and on a larger scale;

Figure 5 is a view similar to Figure 3 of a second embodiment; and

Figure 6 is a view similar to Figure 1 of the second embodiment.

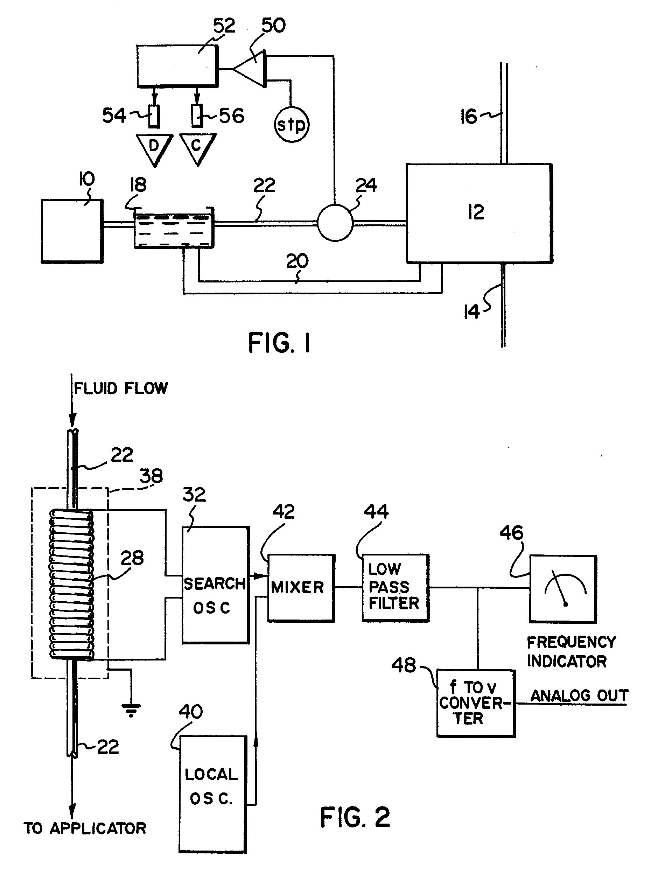

In a first embodiment, in the apparatus shown in Figure 1, magnetically permeable particles, such as ferrite, are to be mixed with a fluid carrier such as a polymeric material in a main mixer 10 to form a fluid composite material. This composite material is conveyed, as will be described, to an applicator shown diagrammatically at 12. The applicator, which is of conventional construction comprising either an extruder or bath applicator with dies, (not shown), applies the fluid composite material in the form of an annulus around a telecommunications conductor 14 to provide a conductor 16 which emerges from the other side of the applicator and is covered with a layer of the fluid material. The process

5

of application and drying of the layer in forming an insulating layer upon the conductor will be described no further as it is a conventional procedure for applying insulating material to a conductor.

From the mixer 10, the mixture passes to a secondary mixer 18 in which the quantities of magnetically permeable material and fluid carrier are adjusted as necessary to provide a set quantity of the magnetically permeable particles in a unit quantity of the composite material. From the secondary mixer 18, the material passes through a main feed line 10 to the applicator and also moves through a bypass line 22 to the applicator. The bypass line is provided for bypassing some of the mixture through a monitoring apparatus, as will now be described, for the purpose of measuring the quantity of particles in the material whereby the quantity may be varied in the secondary mixer to ensure that the quantity is maintained within preset limits within the material.

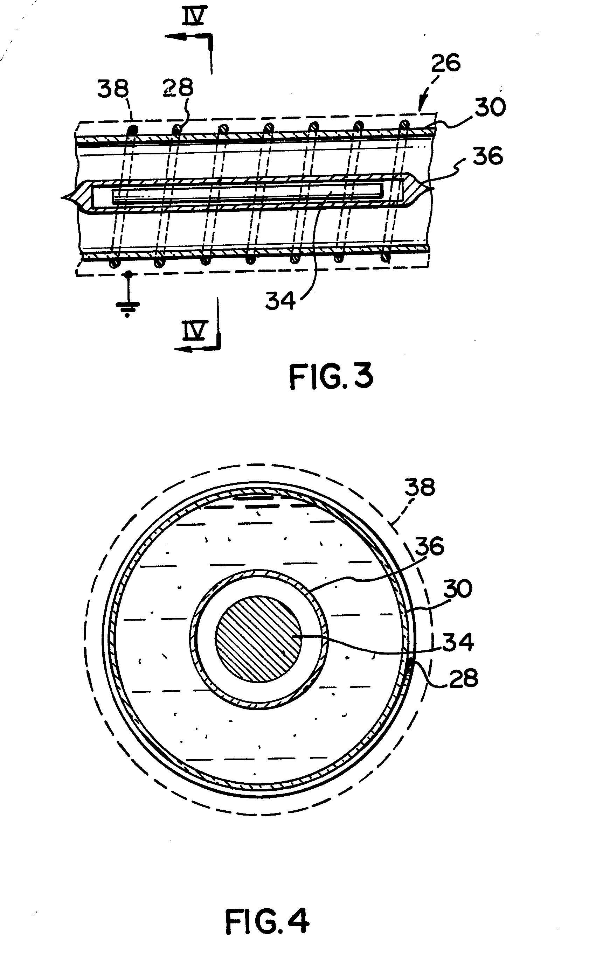

The monitoring apparatus and parts of the control apparatus immediately associated with it are indicated as item 24 in Figure 1. Figures 2, 3 and 4 show in detail the construction of item 24. As shown by Figures 3 and 4, the monitoring apparatus 26 comprises an inductor coil 28, which is wound around a retaining means, i.e. a dielectric vessel in the form of a glass tube 30 which forms part of the bypass line 22. Two ends of the coil are connected electrically to a means for providing a signal corresponding to the inductance of the coil. This means comprises an oscillator 32 which operates at the resonant frequency of the electrical circuit. Within the glass tube 30 is located a metallic slug 34 which need not be of magnetic material, and this slug is isolated from the flow passage in the tube by being disposed within a closed tube 36 of dielectric material, which is contained coaxially within the tube 30 by retaining means such as spider arms not shown. The slug 34 is not an essential part of the apparatus but is used to control the resolution of the apparatus. Surrounding the coil 28 is a grounded electrostatic shield 38 provided to prevent any outside interference with the measurements taken from the coil.

As shown by Figure 2, a second (fixed frequency) oscillator 40 is provided and this supplies a signal corresponding to a datum oscillation of the circuit. Both oscillators are connected to a mixer 42 which combines signals received from oscillator 32 and those received from oscillator 40, and passes a resultant signal to a low pass filter 44. From the filter emerges a difference signal corresponding to the difference in frequency between oscillators 32 and 40. A frequency counter 46 is provided for receiving signals from the filter to indicate the frequency of the circuit. In parallel with the counter 46 is a frequency to voltage converter 48, which converts the signals from the filter into an analogue signal which, as shown by Figure 1, are received by a PID controller 50 which is a signal evaluating means. These signals are evaluated together with datum signals in the controller and issue a control signal to a control means which is a dispensing controller 52. This controller is operably connected to valve means in the form of valves 54 and 56 to control the addition of magnetically permeable particles and fluid carrier to the secondary mixer 18.

In use of the apparatus with the composite material flowing to the applicator 12, some of the material flows along the bypass 22 and through the glass tube 30. With the electrical circuit energized, the coil 28 produces an inductance value, which is affected partly by the quantity of magnetically permeable particles passing through the glass tube and partly by the metallic slug 34. When the coil is energized, eddy currents are set up in the metallic slug which in turn, produce an opposing magnetic field. The effective permeability of the material and the slug is a function of the magnetic composition of the liquid, i.e. the quantity of the magnetically permeable particles. Thus the inductance of the coil at any particular time is dependent upon the quantity of particles in the fluid material and disposed within the coil. At any given time, oscillator 32 operates at a frequency dependent upon the inductance of the coil 28 as affected by the particles passing through it. This signal is sent to the mixer 42. Oscillator 40 is excited and maintained at a frequency corresponding to the natural resonant frequency of the inductance coil 28 with no fluid passing through the glass tube 30. This frequency is sent as the datum signal to the mixer 42 and is combined with the signal from the oscillator 32 to feed into the low pass filter 44. An output signal from the filter 44 which corresponds to the difference in frequency between the signals from the two oscillators, is conveyed to the converter 48 and an analogue signal is sent from there to the PID controller 50 (Figure 1). A resultant control signal from the controller 50 is sent to the dispensing controller 52 and, according to the amplitude of this signal, the appropriate valve 54 or 56 is operated as required for the purpose of controlling the rate of flow of the magnetically permeable particles or the fluid carrier into the secondary mixer 18.

Hence, with the above monitoring and control apparatus, a continuous monitoring of the magnetically permeable particles passing through the tube 30 is performed. Hence any changes in frequency in the oscillator 32 indicate any change in the quantity of magnetically permeable particles passing at any particular time through the coil 28. Any change in particle quantity has the effect of changing the inductance of the coil 28 and in changing the resultant analogue signal to the PID controller. If the quantity of magnetically permeable particles passing through the glass tube is not that desired in the fluid material, then the dispensing controller 52 is accordingly operated through the PID controller to adjust the rate of flow of either the particles or the fluid carrier into the secondary mixer. Thus the quantity of magnetically permeable particles in the material passing to the applicator is held between desired limits.

In a second embodiment, now to be described, monitoring of the particles within the dried composite material is performed to enable the quantity of particles to be controlled, the control being effected in the manner described in the first embodiment.

In the second embodiment, the apparatus differs from that already described in that the inductor coil 28 surrounds a retaining means comprising a guide to hold a conductor along a fixed pass line through the coil. The conductor has a dielectric layer formed from the composite material.

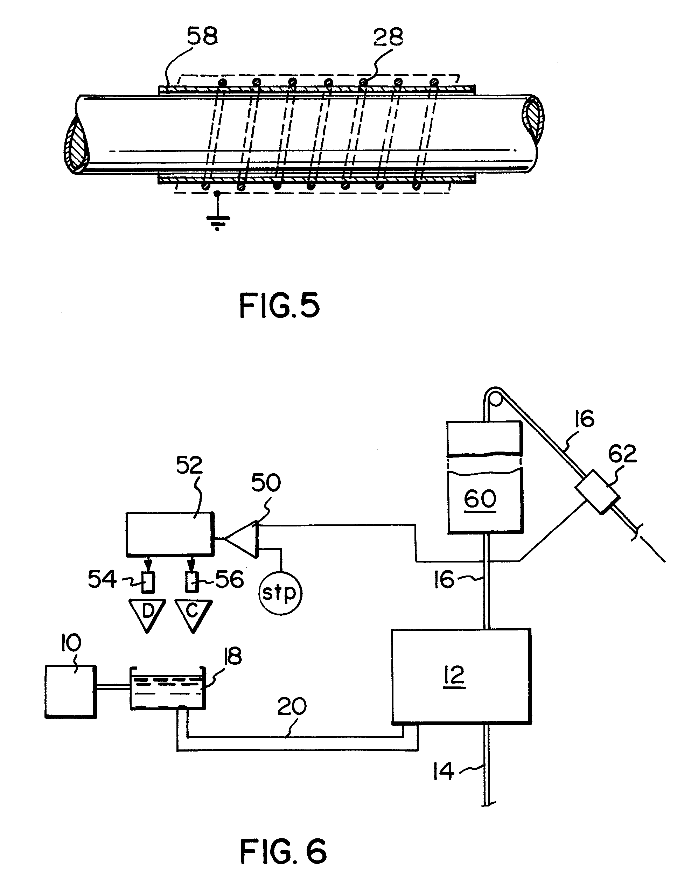

As shown in Figure 5, the retaining means comprises an open-ended glass tube 58 disposed concentrically within the coil 28. The tube and coil are positioned downstream from a drying oven 60 within which the fluid material on the conductor 16 is dried after leaving the applicator 12. This is shown in Figure 6 in which the monitoring apparatus, including tube 58 and the coil, and parts of the control apparatus immediately associated with it are indicated as item 62.

In use of the second embodiment, the conductor 16, with the covering layer of dried composite material, is guided along the tube 58. The coil 28 produces an inductance value which is affected partly by the quantity of magnetically permeable particles passing through tube 58 so that the amount of particles is monitored progressively along the conductor. The monitoring and control apparatus operate in the manner described in the first embodiment to control the rate of flow of the particles or the fluid carrier into the secondary mixer 18.

CLAIMS:

1. A method of monitoring, within a composite material, a quantity of magnetically permeable particles dispersed within a carrier, characterized in energizing an inductor coil disposed in a position surrounding the composite material, and producing a signal corresponding to the inductance of the coil, said inductance influenced by the quantity of magnetically permeable particles in the composite material and within the coil.

2. A method according to claim 1, characterized in producing the signal by measuring the resonant frequency of the circuit.

3. A method according to claim 1, wherein the composite material is fluid and the method is characterized in holding the composite material in a dielectric vessel surrounded by the inductor coil.

4. A method according to claim 3, characterized in passing the material continuously along the vessel provided with an inlet and outlet and producing signals continuously which correspond to the inductance of the coil.

5. A method according to claim 1, wherein the composite material is a dry dielectric layer provided upon a conductor and the method is characterized in passing the layer covered conductor along a fixed pass line through the coil and producing signals corresponding to the inductance of the coil as the conductor is passed through the coil,

11

the inductance influenced by the quantity of particles within the coil and progressively along the conductor.

6.   A method of controlling the quantity of magnetically permeable particles dispersed within a carrier in a composite material characterized in energizing an inductor coil disposed in a position surrounding the composite material; producing a signal corresponding to the inductance of the coil, said inductance influenced by the quantity of magnetically permeable particles in the composite material and within the coil; evaluating the produced signal; and, upon an evaluation differing from that representing a desired quantity of particles, operating a control means to adjust input of either the particles or fluid carrier or both in providing the composite material in fluid form so as to provide the desired quantity of particles in the material.

7.   A method according to claim 6, characterized in passing the composite material in fluid form through a vessel disposed radially within the inductor coil and having an inlet and an outlet, producing signals continuously, each signal corresponding to the inductance of the coil as the material passes through the vessel, and operating the control means dependent upon the evaluation of each signal.

8.   A method according to claim 6, wherein the composite material is a dry dielectric layer provided upon a conductor, the method characterized in passing the layer covered conductor along a fixed pass line through the coil and producing signals continuously, each signal corresponding to the inductance of the coil as the conductor is passed through the coil, and operating the control means dependent upon the evaluation of each signal.

9. Apparatus for monitoring the quantity of magnetically permeable particles dispersed within a carrier in a composite material characterized in comprising an inductor coil (28), a retaining means (30, 58) to house the composite material in a fixed radial position within the coil, and means (32) for providing an electrical signal corresponding to the inductance of the coil.

10. Apparatus according to claim 9, characterized in that the means for providing the signal comprises an oscillator (32) which operates at the resonant frequency of the coil.

11. Apparatus according to claim 9, characterized in that the retaining means comprises a dielectric vessel (30, 58) disposed within the inductor coil.

12. Apparatus according to claim 9, characterized in that the retaining means comprises a guide (58) to hold a conductor along a fixed pass line through the coil, the conductor having a dry covering layer formed from the composite material.

13. Apparatus for controlling the quantity of magnetically permeable particles dispersed within a carrier in a composite material during continuous preparation and removal of the composite material in fluid form, the apparatus characterized in comprising a mixing device (10, 18); valve means (54, 56) to control the addition of separate ingredients into the mixing device (18); an inductor coil (28) disposed downstream from the mixing device (10, 18) along a pass line for the composite material; a retaining means (30, 58) to hold the composite material in a fixed radial position within the coil; means (32) for providing an electrical signal corresponding to the inductance of the coil, said means comprising a first oscillator (32) which operates at the resonant frequency of the coil circuit; a second oscillator (40) to provide a signal corresponding to a datum oscillation; evaluating means (50) for the signals; and control means (52) operable upon an evaluation differing from that representing a desired quantity of particles, to adjust the valve means and affect the relative rates of input of the ingredients thereby to adjust the quantity of particles towards that desired.

14. Apparatus according to claim 13, characterized in that the retaining means comprises a dielectric vessel (30) for the fluid composite material disposed downstream from an outlet from the mixing device (18).

15. Apparatus according to claim 13 for controlling the quantity of particles in the composite material providing a dry dielectric layer upon a conductor, characterized in comprising an applicator (12) to apply the fluid composite material as a fluid layer to the conductor (14) as the conductor moves along a pass line; a drying oven (60) downstream of the applicator along the conductor pass line to dry the material into the dry dielectric layer; and the retaining means comprising a guide (58) for the layer covered conductor, the guide disposed downstream from the oven and surrounded by the coil (28).

FIG. 1

FLUID FLOW

TO APPLICATOR

FIG. 2

FREQUENCY INDICATOR

ANALOG OUT

0157496

2/3

FIG.3

FIG.4

**FIG.5**

**FIG. 6**